# EUROPEAN PATENT APPLICATION

(11) **EP 4 624 785 A1**
(43) Date of publication of application: **01.10.2025**
(21) Application number: 24166720.3
(22) Date of filing: 27.03.2024
(51) Int. Cl.: F16K 3/24, G01N 1/20, G01N 35/10, B29C 70/48, B29C 70/54

(54) **A SAMPLE EXTRACTION APPARATUS AND METHOD FOR A RESIN TRANSFER MOULDING (RTM) PROCESS**

(71) Applicant: Airbus Operations GmbH, 21129 Hamburg (DE)
(72) Inventor: Schiller, Jan, 21129 Hamburg (DE); Meyer, Tobias, 21129 Hamburg (DE); Teich, Benjamin, 21129 Hamburg (DE); de Jong, Claas, 21129 Hamburg (DE)

(57) **Abstract**

In order to allow a live-drawing of an uncured resin sample (42) during a resin transfer moulding process, the invention proposes a sample extraction apparatus (20) that is disposed on a resin transfer moulding apparatus (10). The extraction apparatus (20) is mounted at a location between a mixing head (18) and a moulding tool (12), in order to receive freshly mixed uncured resin (46). The mixed uncured resin (46) is transported through an extraction valve (24) to a sample vessel (34), where it can be protected from further curing. The uncured resin sample (42) can then be analysed with conventional methods, such as high-performance liquid chromatography in order to determine a mixing ratio or other properties of the injected resin.

## Description

The invention relates to a sample extraction apparatus for a resin transfer moulding (RTM) apparatus, preferably a high-pressure RTM (HPRTM) apparatus. The invention further relates to an apparatus, a system and methods for sample extraction and analysis.

RTM is becoming increasingly an important part of modern aircraft manufacturing. More complex parts, e.g., control surfaces or structural components, can be manufactured in less time as more cumbersome steps, such as autoclave curing, can be avoided. A further development of the RTM process is the high-pressure RTM (HPRTM) process that is also becoming more popular in the field.

Nowadays, the RTM process is performed only with one-component resins as far as the field of aerospace manufacturing is concerned. However, for the various advantages of multi-component resins, specifically two-component (or 2K) resins, are a desired way of future manufacturing. The mixing ratio between the components, i.e. epoxy resin and hardener, is an important factor in determining pot life, curing time and final strength.

Thus, there exists a desire in the field to obtain uncured resin samples from during the RTM process, e.g., in order to be able to analyse the mixing ratio or other features of the uncured resin.

It is the object of the invention to improve the RTM process. The object is achieved by the subject-matter of the independent claims. Preferred embodiments are subject-matter of the dependent claims.

The invention provides a sample extraction apparatus for a resin transfer moulding (RTM) apparatus, the sample extraction apparatus comprising an extraction valve that is attachable to the RTM apparatus and configured for extracting uncured resin; and a sample vessel that is fluidly connected to the extraction valve and configured for storing the extracted uncured resin, wherein the extraction valve is switchable between an open state, in which uncured resin may flow to the sample vessel, and a closed state, in which the flow of resin to the sample vessel is blocked.

The extraction apparatus allows extraction of an uncured resin sample during an HPRTM process, specifically at the time of infiltrating/injecting the uncured resin. The extraction valve allows the resin to flow away from the heated parts of the RTM machine and into the sample vessel. Thus, the risk of curing the sample can be reduced.

The extraction apparatus enables an inline validation of the properties of the resin that is used in infiltration. In case of multi-component resins, e.g., two-component resins, the extraction apparatus enables measurement of the mixing ratio.

An idea is to provide more direct data of the resin as it is infused instead of relying on more indirect measurement systems such as flowmeters. It is expected that the more direct approach as disclosed herein can reduce uncertainties of the measured resin properties.

The extraction apparatus allows capturing a sample immediately before curing. The captured sample can be analysed, e.g., using a high-performance liquid chromatography (HPLC) process, which is generally known.

The extraction apparatus can be applied for fully automated processes. Preparation steps are not required and the uncured resin sample can be removed comparatively easy.

Preferably, the extraction valve comprises a fluid channel and a piston member. Preferably, the fluid channel is configured to fluidly connect the sample vessel to the RTM apparatus. Preferably, the piston member is movable such that the piston member selectively allows or blocks the uncured resin flow to the sample vessel. The piston member can selectively open or block the fluid channel, where in the open state a small amount of uncured resin can be extracted during the injection process. The captured sample can flow to the sample vessel, where the uncured resin can immediately cool down (or be cooled with a cooling device) and the curing process abruptly stops. This enables the further use of an uncured sample, e.g., in an HPLC test.

Preferably, the piston member is movably arranged within the fluid channel to move along a longitudinal direction of the fluid channel. Preferably, when the piston member is in the fully extended position, the extraction valve is in the closed state. Preferably, when the piston member is in the fully retracted position, the extraction valve is in the open state. The piston member can push resin residue from the fluid channel back into the RTM apparatus, thereby automatically cleaning the extraction valve for the next sample.

Preferably, in a fully extended position, the piston member protrudes from the extraction apparatus, preferably from the fluid channel. The piston member can push the resin residue further into the RTM apparatus, e.g., back into the injection port.

Preferably, the sample extraction apparatus further comprises a drive unit that is configured to drive the extraction valve between the open state and the closed state. The drive unit has sufficient power to move the extraction valve, even if some cured resin residue is present.

Preferably, the drive unit is configured to drive the piston member between the fully extended position and the fully retracted position. Preferably, the drive unit comprises a linear drive train to drive the piston member. The drive unit is sufficiently powerful to break any resin residue that might otherwise fix the piston member to the extraction valve.

Preferably, the sample extraction apparatus further comprises a sample vessel changing apparatus that is configured for removing the sample vessel and fluidly connecting another sample vessel to the extraction valve. With this configuration it is possible to extract multiple samples during infiltration without manually changing the sample vessel.

Preferably, the sample vessel changing apparatus is configured to detachably fasten the sample vessel to the extraction valve, preferably to the sample vessel mount, to fluidly connect the sample vessel. Preferably, the sample vessel changing apparatus is configured to hold the sample vessel against the extraction valve, preferably the sample vessel mount, to fluidly connect the sample vessel. Instead of fastening the sample vessel to the extraction valve, a sample vessel changing apparatus may simply hold the sample vessel such that it can capture the extracted uncured resin. Thus, exchanging the sample vessels for different samples may be sped up.

The invention provides a resin transfer moulding (RTM) apparatus comprising a mould cavity and an injection port configured for injecting uncured resin into the mould cavity and a preferred extraction apparatus, wherein the extraction valve is attached before the injection port along a resin flow direction of the uncured resin in order to extract the uncured resin. Preferably, the RTM apparatus is configured as a high-pressure RTM apparatus. The (HP)RTM process typically involves putting carbon fibre textiles or other textile material into a mould cavity. The mould is typically heated up to about 160°C to 200 °C depending on the curing temperature of the resin. The mould cavity with the embedded textile material is evacuated. Resin is injected into the mould cavity. As the resin is pressed into the mould cavity, the textile material is infiltrated. The extraction valve is opened during the infiltration to extract an uncured resin sample. When the mould cavity is completely filled completely (as may be indicated by a sudden rise in pressure), the resin injection stops. After the resin is cured, the mould is opened and the finished fibre reinforced part can be demoulded.

Preferably, the RTM apparatus comprises a mixing head for mixing components of a multi-component resin, preferably a two-component resin, wherein the mixing head is fluidly connected to the injection port and the extraction valve is attached between the mixing head and the injection port along the resin flow direction. When a multi-component resin such as epoxy resin is used, the components are mixed on demand in a mixing head. The resin is initially below a curing temperature and the mixing head may exceed the curing temperature close to the mould tool. The mixing head may be mounted directly to the mould tool. An adapter can be mounted between the mixing head and the mould tool. The extraction valve is attached between the mixing head and the injection port. During the infiltration, the mixing head gets opened and will draw out resin. The resin flows or rather gets pushed into the injection port and, if opened, through the extraction valve into the sample vessel.

Preferably, when in the fully extended position, the piston member protrudes from fluid channel to form a wall portion of the injection port. The piston member is basically configured to be able to push residual resin from the fluid channel back into the injection port. This allows a clean extraction valve that is ready for extracting another sample without additional cleaning.

Preferably, the RTM apparatus further comprises a control unit that controls the operation of the RTM apparatus.

In some embodiments, the control unit is able to generate recipes, save recipes, load recipes, and/or rename recipes. A recipe typically includes all parameters that are necessary for the RTM process, such as curing temperature, resin composition (if any), etc.

In some embodiments, the control unit can perform a reference process, e.g., after power interruption or reassembly in order to test for correct functionality.

In some embodiments, the control unit can switch the RTM apparatus to a cleaning state that allows performing of a cleaning process, e.g., by opening the piston member, particularly after demoulding the part and/or during manual cleaning of the extraction valve or the sample vessel.

In some embodiments, the control unit opens the piston member to evacuate the sample vessel. In some embodiments, the control unit opens the piston member for resin extraction during infiltration. Both options are possible to perform in a single recipe.

The control unit may particularly control timing of the sample extraction, e.g., a time delay from a start-trigger until the start of driving the piston member open. The control unit may control the time interval from position "piston closed" to position "piston open". The control unit may control the time interval of the piston member being in the position "piston open". The control unit may control the time interval from position "piston open" to position "piston closed".

The control unit may log each process cycle in a protocol. The protocol can be visible on an HMI, such as a screen. The protocol can be logged in a data-logger. The logged information may include, but is not limited to the run number, date, time, recipe name, all relevant required process parameters, and all relevant actual process parameters.

The control unit may cause displaying of the current status of the extraction valve and piston member position.

The invention provides an extraction method for extracting an uncured resin sample during a resin transfer moulding (RTM) process performed by a preferred RTM apparatus, the method comprising:
a) injecting uncured resin through the injection port into the mould cavity; and
b) extracting at least one uncured resin sample by switching the extraction valve into the open state during injecting.

Preferably, step a) involves a multi-component uncured resin and mixing the components of the uncured resin in a mixing head before injecting.

Preferably, step b) involves removing the sample vessel in a manner that prevents curing of the uncured resin sample.

Preferably, step b) involves extracting the uncured resin sample from a location before the injection port.

Preferably, step b) involves extracting the uncured resin sample from a location between the mixing head and the injection port.

Preferably, step b) involves extracting a plurality of uncured resin samples by switching the extraction valve into the open state during injection to collect one uncured resin sample and switching the extraction valve into the closed state before extracting another uncured resin sample.

Preferably, step b) involves changing the sample vessel after extracting the uncured resin sample before extracting another uncured resin sample, preferably by means of a sample vessel changing apparatus.

The invention provides a computer program that includes instructions that, upon execution by a control unit of the preferred resin transfer moulding (RTM) apparatus, cause the RTM apparatus to perform a preferred extraction method.

The invention provides a method for measuring a mixing ratio of components of a multi-component resin, preferably a two-component resin, the method comprising:
a) performing a preferred extraction method in order to obtain an uncured multi-component resin sample; and
b) analysing the uncured resin sample by means of high-performance liquid chromatography to obtain a mixing ratio between at least two components of the multi-component resin sample.

The invention provides a system for measuring a mixing ratio of components of a multi-component resin, preferably a two-component resin, comprising means to perform the method for measuring.

Preferably, a first means is a sample extraction apparatus of any of the claims X to Y or a resin transfer moulding apparatus of any of the claims X to Y that are configured to perform step a), wherein a second means is a high-performance liquid chromatography apparatus that is configured to perform step b).

Embodiments of the invention are described in more detail with reference to the accompanying schematic drawings that are listed below
Fig. 1 depicts an embodiment of a resin transfer moulding apparatus;
Fig. 2 to
Fig. 5 depicts a resin extraction process during resin transfer moulding.

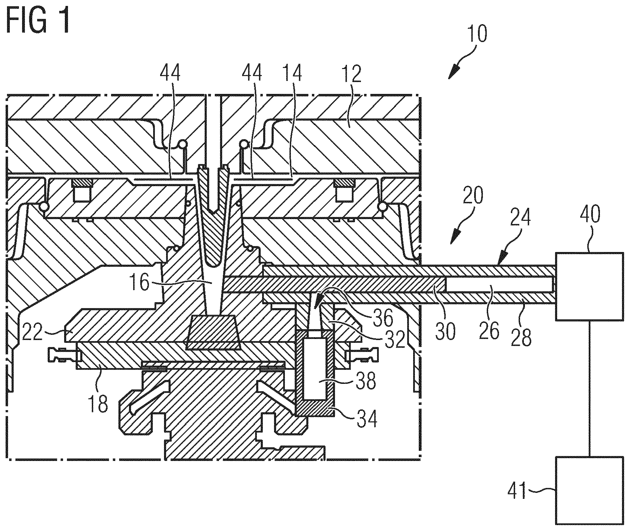

Fig. 1 depicts a resin transfer moulding (RTM) apparatus 10. The RTM apparatus 10 comprises a moulding tool 12 that defines a mould cavity 14. The mould cavity 14 is shaped to accommodate a fibre material, e.g., carbon fibre material. The moulding tool 12 can be heated to a temperature suitable for curing resin.

The RTM apparatus 10 includes an injection port 16 and a mixing head 18. The injection port 16 fluidly connects the mould cavity 14 to the mixing head 18 such that mixed uncured resin can flow from the mixing head 18 to the mould cavity 14.

The mixing head 18 receives two components of a two-component resin. A first component is an epoxy resin material and a second component is a hardener for the epoxy resin material. The mixing head 18 is heated to a temperature that generally avoids curing but allows increased resin flow.

The RTM apparatus 10 includes a sample extraction apparatus 20 that is preferably mounted to a connector 22. The connector 22 includes the injection port 16 that fluidly connects the mixing head 18 to the mould cavity 14. The sample extraction apparatus 20 is generally disposed between the mixing head 18 and the mould cavity 14 along the resin flow direction (vertical from bottom towards the top in Fig. 1). The extraction apparatus 20 is fluidly connected to the injection port 16.

The sample extraction apparatus 20 includes a sample extraction valve 24. The sample extraction valve 24 is mounted to the connector 22. The sample extraction valve 24 is generally a cylinder-shaped and elongated element that extends in a longitudinal direction. The sample extraction valve 24 includes a fluid channel 26 that is surrounded by a circumferential wall 28.

The sample extraction valve 24 comprises a piston member 30. The piston member 30 is disposed in the fluid channel 26. The cross-section of the piston member 30 matches the cross-section of the fluid channel 26. The piston member 30 is movably supported by the circumferential wall 28. The piston member 30 can move, specifically slide, within the fluid channel 26.

The sample extraction valve 24 includes a sample vessel mount 32 for detachably mounting a sample vessel 34. The extraction valve 24 has formed therein a fluid passage 36 that fluidly connects the fluid channel 26 with the sample vessel 34. The fluid passage 36 is formed through the sample vessel mount 32. The fluid passage 36 is preferably conically shaped such that the diameter of the fluid passage 36 increases towards the sample vessel 34. The sample vessel mount 32 can include a thermally resistive material to reduce heat flux from the heated portion of the RTM apparatus 10 to the sample vessel 34.

The sample extraction apparatus 20 comprises the sample vessel 34. The sample vessel 34 is detachably fastened to the extraction valve 24, specifically to the sample vessel mount 32. The sample vessel 34 may be threaded to the extraction valve 24, specifically to the sample vessel mount 32. The sample vessel 34 includes a sample chamber 38 that can store an amount of uncured resin.

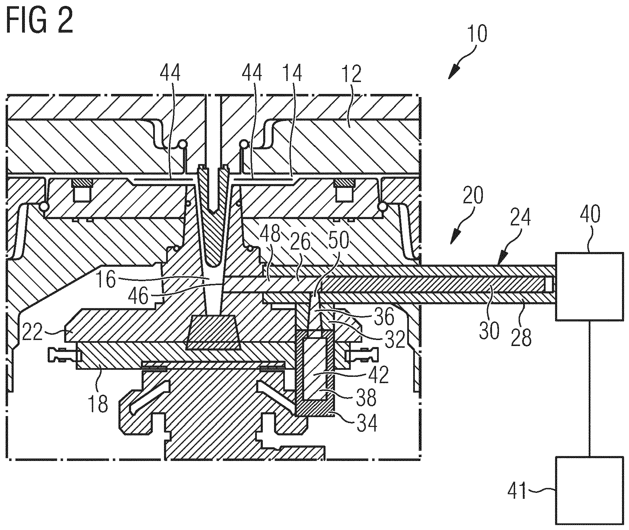

The sample extraction apparatus 20 includes a drive unit 40. The drive unit 40 is coupled to the piston member 30 to drive it between a fully extended position (shown in Fig. 1) and a fully retracted position (shown in Fig. 2). The drive unit 40 is preferably a linear drive unit that has a gear train that transforms rotational motion of a motor into linear motion of the piston member 30.

In the fully extended position, the piston member 30 protrudes from the fluid channel 26 through the connector 22 and forms a side wall of the injection port 16.

In the fully retracted position, the piston member 30 allows uncured resin to flow from the injection port 16 into the fluid channel 26. The uncured resin can further flow through the fluid passage 36 and finally enter the sample vessel 34, specifically the sample chamber 38.

The RTM apparatus 10 includes a control unit 41 that is configured to control operation of the RTM apparatus 10 and specifically the sample extraction apparatus 20.

Referring to Fig. 1 to Fig. 5, an extraction method for extracting an uncured resin sample 42. Initially, as illustrated in Fig. 1, the mould cavity 14 includes a carbon fibre material 44 that is to be infiltrated with uncured resin. The moulding tool 12 is closed. The two components of the two-component resin are pressurized and fed to the mixing head 18, where the components are mixed. Freshly mixed uncured resin 46 flows from the mixing head 18 through the connector 22 into the mould cavity 14 via the injection port 16.

As shown in Fig. 2, during infiltration the piston member 30 is retracted from the fully extended position by the drive unit 40 such that a resin flow path 48 from the injection port 16 through the fluid channel 26 and the fluid passage 36 to the sample vessel 34 is formed. The freshly mixed uncured resin 46 flows along the resin flow path 48 into the sample vessel 34, specifically the sample chamber 38.

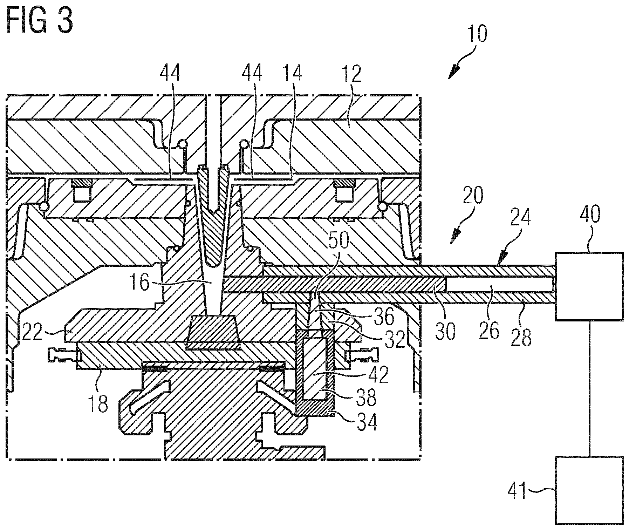

Fig. 3 shows a situation while still infiltrating resin or after the infiltration. The piston member 30 is driven into the fully extended position. Due to movement of the piston member 30 possible resin residue that was present in the fluid channel 26 is pushed back into the injection port 16. The uncured resin sample 42 is located in the sample vessel 34. Some uncured residual resin 50 is present in the fluid passage 36.

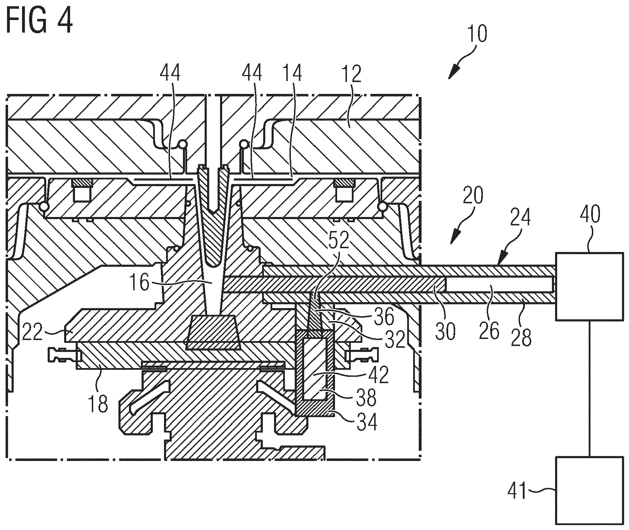

Fig. 4 illustrates that the uncured residual resin 50 is typically transformed into cured residual resin 52 that may plug the fluid passage 36 and the sample chamber 38.

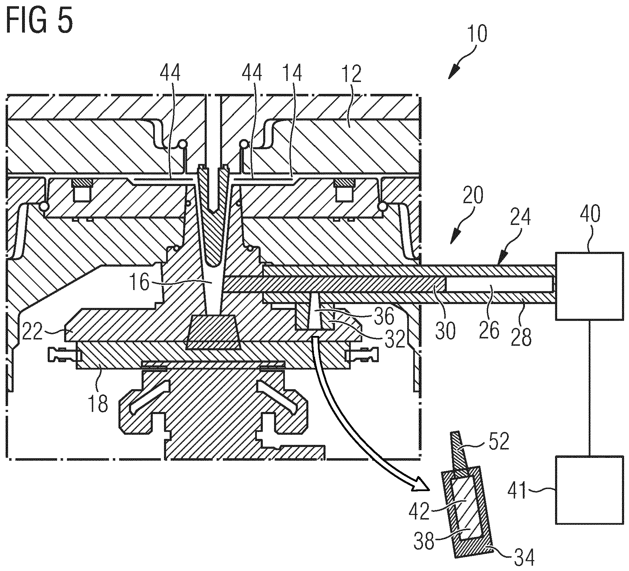

As shown in Fig. 5, the sample vessel 34 is removed from the extraction valve 24 and the cured residual resin 52 acts as a plug that prevents the uncured resin sample 42 from spilling from the sample vessel 34.

The sample vessel 34 can then be brought into a lab for analysis of the uncured resin sample 42. The uncured resin sample 42 is preferably analysed by high-performance liquid chromatography (HLPC) to obtain a mixing ratio between the first and second components of the two-component resin. It should be noted that HLPC is a common method in the field for determining mixing ratios.

In a variant that is not explicitly shown, multiple sample vessels 34 can be provided and sequentially attached to and detached from the extraction valve 24 in order to collect multiple uncured resin samples 42 for the duration of the infiltration. The sample vessels 34 can be exchanged manually or with a sample vessel change apparatus (not shown) that can involve a robotic arm, for example. Instead of fastening the sample vessel 34 to the extraction valve 24, the sample vessel change apparatus can simply hold the sample vessel 34 against the extraction valve 24.

In order to allow a live-drawing of an uncured resin sample (42) during a resin transfer moulding process, the invention proposes a sample extraction apparatus (20) that is disposed on a resin transfer moulding apparatus (10). The extraction apparatus (20) is mounted at a location between a mixing head (18) and a moulding tool (12), in order to receive freshly mixed uncured resin (46). The mixed uncured resin (46) is transported through an extraction valve (24) to a sample vessel (34), where it can be protected from further curing. The uncured resin sample (42) can then be analysed with conventional methods, such as high-performance liquid chromatography in order to determine a mixing ratio or other properties of the injected resin.

### List of reference signs:

10 resin transfer moulding (RTM) apparatus
12 moulding tool
14 mould cavity
16 injection port
18 mixing head
20 sample extraction apparatus
22 connector
24 extraction valve
26 fluid channel
28 circumferential wall
30 piston member
32 sample vessel mount
34 sample vessel
36 fluid passage
38 sample chamber
40 drive unit
41 control unit
42 uncured resin sample
44 carbon fibre material
46 mixed uncured resin
48 resin flow path
50 uncured residual resin
52 cured residual resin

## Claims

1. A sample extraction apparatus (20) for a resin transfer moulding (RTM) apparatus (10), the sample extraction apparatus (20) comprising:
- an extraction valve (24) that is attachable to the RTM apparatus (10) and configured for extracting uncured resin;
- a sample vessel (34) that is fluidly connected to the extraction valve (24) and configured for storing the extracted uncured resin,
wherein the extraction valve (24) is switchable between an open state, in which uncured resin may flow to the sample vessel (34), and a closed state, in which the flow of resin to the sample vessel (34) is blocked.

2. The sample extraction apparatus (20) of claim 1, wherein the extraction valve (24) comprises a fluid channel (26) and a piston member (30), wherein the fluid channel (26) is configured to fluidly connect the sample vessel (34) to the RTM apparatus (10), wherein the piston member (30) is movable such that the piston member (30) selectively allows or blocks the uncured resin flow to the sample vessel (34), wherein optionally the piston member (30) is movably arranged within the fluid channel (26) to move along a longitudinal direction of the fluid channel (26).

3. The sample extraction apparatus (20) of claim 2, wherein, in a fully extended position, the piston member (30) protrudes from the extraction apparatus, preferably from the fluid channel (26).

4. The sample extraction apparatus (20) of any of the preceding claims, further comprising a drive unit (40) that is configured to drive the extraction valve (24) between the open state and the closed state.

5. The sample extraction apparatus (20) of any of the preceding claims, further comprising a sample vessel changing apparatus that is configured for removing the sample vessel (34) and fluidly connecting another sample vessel (34) to the extraction valve (24).

6. The sample extraction apparatus (20) of claim 5, wherein the sample vessel changing apparatus is configured to detachably fasten the sample vessel (34) to the extraction valve (24), preferably to the sample vessel mount (32), to fluidly connect the sample vessel (34); and/or wherein the sample vessel changing apparatus is configured to hold the sample vessel (34) against the extraction valve (24), preferably to the sample vessel mount (32), to fluidly connect the sample vessel (34).

7. A resin transfer moulding (RTM) apparatus (10) comprising a mould cavity (14) and an injection port (16) configured for injecting uncured resin into the mould cavity (14) and an extraction valve (24) of any of the preceding claims, wherein the extraction valve (24) is attached before the injection port (16) along a resin flow direction of the uncured resin in order to extract the uncured resin.

8. The RTM apparatus (10) of claim 7, wherein the RTM apparatus (10) comprises a mixing head (18) for mixing components of a multi-component resin, preferably a two-component resin, wherein the mixing head (18) is fluidly connected to the injection port (16) and the extraction valve (24) is attached between the mixing head (18) and the injection port (16) along the resin flow direction.

9. The RTM apparatus (10) of claim 7 or 8, wherein, when in the fully extended position, the piston member(30) protrudes from fluid channel (26) to form a wall portion of the injection port (16).

10. An extraction method for extracting an uncured resin sample (42) during a resin transfer moulding (RTM) process performed by an RTM apparatus (10) of any of the claims 7 to 9, the method comprising:
a) injecting uncured resin through the injection port (16) into the mould cavity (14); and
b) extracting at least one uncured resin sample (42) by switching the extraction valve (24) into the open state during injecting.

11. The method of claim 10, wherein step a) involves a multi-component uncured resin and mixing the components of the uncured resin in a mixing head (18) before injecting.

12. The method of claim 10 or 11, wherein step b) involves any of the following steps:
b1) removing the sample vessel (34), preferably the inner vessel (56), in a manner that prevents curing of the uncured resin sample (42); and/or
b2) extracting the uncured resin sample (42) from a location before the injection port (16); and/or
b3) extracting the uncured resin sample (42) from a location between the mixing head (18) and the injection port (16); and/or
b4) extracting a plurality of uncured resin samples (42) by switching the extraction valve (24) into the open state during injection to collect one uncured resin sample (42) and switching the extraction valve (24) into the closed state before extracting another uncured resin sample (42); and/or
b5) changing the sample vessel (34), preferably the inner vessel (56), after extracting the uncured resin sample (42) before extracting another uncured resin sample (42), preferably by means of a sample vessel changing apparatus.

13. A computer program that includes instructions that, upon execution by a control unit (41) of the resin transfer moulding (RTM) apparatus (10) of any of the claims 7 to 9, cause the RTM apparatus (10) to perform a method of any of the claims 10 to 12.

14. A method for measuring a mixing ratio of components of a multi-component resin, preferably a two-component resin, the method comprising:
a) performing an extraction method of any of the claims 11 or 12 in order to obtain an uncured multi-component resin sample; and
b) analysing the uncured resin sample (42) by means of high-performance liquid chromatography to obtain a mixing ratio between at least two components of the multi-component resin sample.

15. A system for measuring a mixing ratio of components of a multi-component resin, preferably a two-component resin, comprising means to perform the method of claim 14.
